# EUROPÄISCHE PATENTANMELDUNG

(11) **EP 2 492 564 A1**
(43) Veröffentlichungstag der Anmeldung: **29.08.2012**
(21) Anmeldenummer: 12156755.6
(22) Anmeldetag: 23.02.2012
(51) Int. Cl.: F16L 3/10, F16B 2/06, F16B 9/02, A47G 7/04, A47H 27/00

(54) **Vorrichtung zur Halterung von Gegenständen an einem Balkongeländer**

(30) Priorität: 25.02.2011 DE 202011003253 U
(71) Anmelder: Gusto products & services GMBH, 51063 Köln (DE)
(72) Erfinder: Traut, Andreas, 50674 Köln (DE)
(74) Vertreter: Müller, Karl-Ernst

(57) **Zusammenfassung**

Eine Befestigungsvorrichtung für Funktionsgegenstände wie Blumentopf (26), Aschenbecher, Flaschenhalter, Glashalter oder dergleichen an einer Geländerstrebe (30) eines Balkongeländers (29), bestehend aus einer U-förmigen Halteklammer (11), deren Seitenschenkel (12) die Geländerstrebe (30) zwischen sich aufnehmen und in deren ihre Seitenschenkel (12) verbindendem Steg (13) eine in Anlage an der von der Halteklammer (11) umfassten Geländerstrebe (30) zu bringende und durch Drehung in einem an dem Steg (13) ausgebildeten Gewinde längsverschiebbare Spannschraube (14) vorgesehen ist, und aus einem die offene Seite der Halteklammer (11) verschließenden Formteil (17), welches mit seiner dem Steg (13) zugewandten Unterseite (18) auf der Geländerstrebe (30) aufliegt und auf seiner gegenüberliegenden Oberseite eine ebene Fläche (19) mit einer darin eingelassenen Gewindebohrung (20) zur Aufnahme einer den Funktionsgegenstand an dem Formteil (17) festlegenden Gewindeschraube (27) aufweist, wobei an dem Formteil (17) eine Formschlussverbindung mit den beiden darin eingreifenden freien Enden (23) der Seitenschenkel (12) der Halteklammer (11) eingerichtet ist.

## Beschreibung

Die Erfindung betrifft eine Befestigungsvorrichtung für Funktionsgegenstände wie Blumentopf, Aschenbecher, Flaschenhalter, Glashalter, Teelichthalter, Accessoires oder dergleichen an einer Geländerstrebe eines Balkongeländers.

Soweit Balkone in der Regel eine vergleichsweise geringe Fläche, insbesondere Tiefe mit Bezug zu einer Hauswand aufweisen, gibt es nur wenig Platz für die Unterbringung von bei der Nutzung des Balkons zweckmäßigen Gegenständen, wie beispielsweise Aschenbecher, Flaschenhalter, Glashalter oder dergleichen einerseits oder von der Verschönerung des Balkons dienenden Gegenständen wie Blumentöpfen oder ähnlichen Verschönerungsgegenständen andererseits. Die Unterbringung derartiger Gegenstände auf auf den Balkon gestellten oder auch innenseitig an einem Balkongeländer aufgehängten Tischen schmälert die nutzbare Fläche des Balkons. Die Fläche über dem Balkongeländer ist bis dato ungenutzt.

Der Erfindung liegt somit die Aufgabe zugrunde, eine Möglichkeit zur sicheren Unterbringung von der Nutzung oder der Verschönerung eines Balkons dienenden Funktionsgegenständen zur Verfügung zu stellen.

Die Lösung dieser Aufgabe ergibt sich einschließlich vorteilhafter Augestaltungen und Weiterbildungen der Erfindung aus dem Inhalt der Patentansprüche, welche dieser Beschreibung nachgestellt sind.

Die Erfindung sieht in ihrem Grundgedanken eine Befestigungsvorrichtung für Funktionsgegenstände und/oder Dekogegenstände an einer Geländerstrebe eines Balkongeländers vor, die aus einer U-förmigen Halteklammer und aus einem die offene Seite der Klammer verschließenden Formteil besteht, wobei die Seitenschenkel der Halteklammer die Geländerstrebe zwischen sich aufnehmen und in dem die Seitenschenkel verbindenden Steg eine in Anlage an der von der Halteklammer umfassten Geländerstrebe zu bringende und durch Drehung in einem an dem Steg ausgebildeten Gewinde längsverschiebbare Spannschraube vorgesehen ist, und wobei ferner das die offene Seite der Halteklammer verschließende Formteil mit seiner dem Steg zuwandten Unterseite auf der Geländerstrebe aufliegt und auf seiner gegenüberliegenden Oberseite eine ebene Fläche mit einer darin eingelassenen Gewindebohrung zur Aufnahme einer den Funktionsgegenstand an dem Formteil festlegenden Gewindeschraube aufweist, wobei weiterhin an dem Formteil eine Formschlussverbindung mit den beiden darin eingreifenden freien Enden der Seitenschenkel der Halteklammer eingerichtet ist.

Mit der Erfindung ist der Vorteil verbunden, dass das Balkongeländer einerseits sozusagen als Ablagefläche in die Nutzung des Balkons einbezogen ist, andererseits aber aufgrund der vorgesehenen Befestigung der Funktionsgegenstände an der am Balkongeländer angebrachten Halteklammer gewährleistet ist, dass die entsprechenden Gegenstände nicht vom Balkongeländer herabfallen und dadurch Dritte gefährden können. Die Formschlussverbindung zur Festlegung der Halteklammer an dem Balkongeländer stellt dabei sicher, dass sich auch die Halteklammer selbst bei einer nicht ausreichend festgezogenen Spannschraube oder bei einem Lösen der Spannschraube nicht von dem Balkongeländer lösen kann.

Nach einem Ausführungsbeispiel der Erfindung ist dabei vorgesehen, dass die Formschlussverbindung mit jedem Seitenschenkel jeweils aus einer in das massiv ausgebildete Formteil eingelassenen, von der Oberseite des Formteils ausgehenden und sich in Richtung von dessen Unterseite erstreckenden Nut gebildet ist, in welchen Nuten die hakenartig nach innen umgebogenen Enden der Seitenschenkel der Halteklammer eingreifen. Die Befestigung der Halteklammer an der Geländerstrebe eines Balkongeländers wird weiterhin nach einem Ausführungsbeispiel der Erfindung dadurch verbessert, dass die in den Nuten des Formteiles festgelegten Enden der Seitenschenkel der Halteklammer mit einer Verdickung versehen sind, und die Nuten des Formteils in ihrem Tiefsten einen erweiterten Querschnitt zur Aufnahme der Verdickungen der Enden der Seitenschenkel aufweisen derart, dass die Verdickungen in den Nuten formschlüssig festgelegt sind und das Formteil seitlich zwischen die Enden der Seitenschenkel der Halteklammer einschiebbar ist.

Es kann vorgesehen sein, dass die lichte Breite der Halteklammer zwischen ihren Seitenschenkeln im Bereich ihres Steges geringer ist als im Berei ch der an dem Formteil festgelegten Enden der Seitenschenkel.

Im Hinblick auf eine sichere Festlegung der Halteklammer an der Geländerstrebe kann vorgesehen sein, dass das Formteil an seiner dem Steg der Halteklammer zugewandten Unterseite eine die Geländerstrebe aufnehmende Einzeihung aufweist und/oder dass an dem dem Formteil zugewandten Ende der Spannschraube ein an die Kontur der Geländerstrebe angepasstes Anlagestück angebracht ist. Mittels der Einziehung wird ein gewisser Formschluss zwischen dem Formstück und der Geländerstrebe hergestellt, wobei auch vorgesehen sein kann, dass die Form der Einziehung an die Kontur der Geländerstrebe angepasst ist. Dies gilt insbesondere in den Fällen, in denen die Geländerstrebe des Balkongeländers einen von einem rechteckigen Querschnitt abweichenden Querschnitt, insbesondere einen runden oder elliptischen Querschnitt aufweist.

Es kann zweckmäßig sein, wenn die Halteklammer aus einer federnden Material besteht, so dass die Festlegung der Halteklammer an einer Geländerstrebe durch eine entsprechende Vorspannung bei der Anlage ihrer Seitenschenkel an dem Balkongeländer unterstützt wird.

In der Zeichnung ist ein Ausführungsbeispiel der Erfindung wiedergegeben, welches nachstehend beschrieben ist. Es zeigen:
- Fig. 1: eine Befestigungsvorrichtung mit einer Halterklammer und zugehörigem Formteil in einer Perspektivansicht,
- Fig. 2: die Halteklammer mit Formteil während der Anbringung der Befestigungsvorrichtung an einer Geländerstrebe eines Balkongeländers,
- Fig. 3: die an der Geländerstrebe gemäß Figuren 1 und 2 montierte Befestigungsvorrichtung einschließlich eines daran festzulegenden Blumentopfes als Funktionsgegenstand.

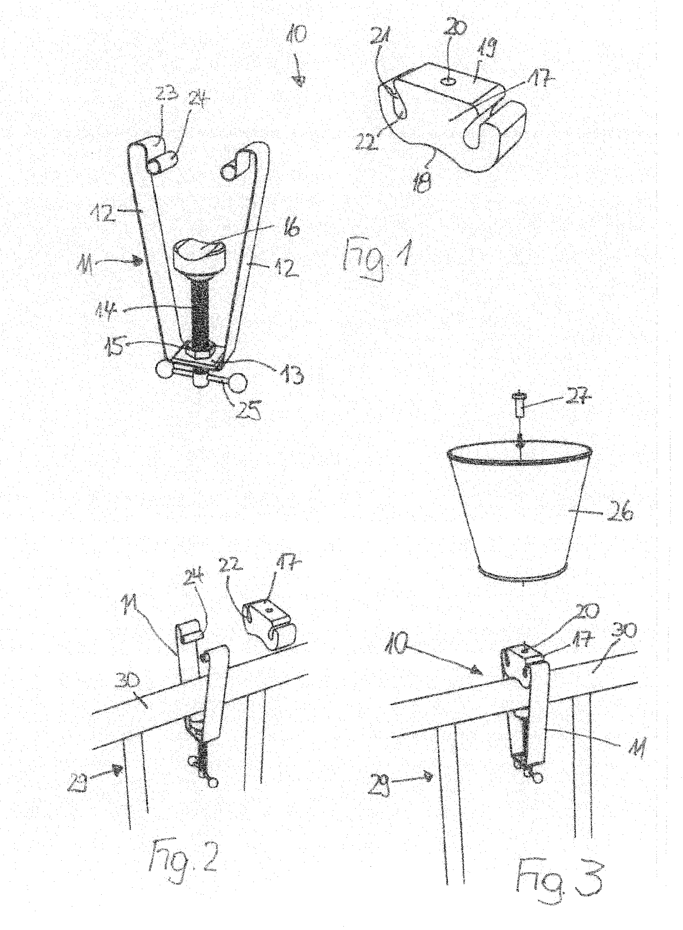

Wie sich zunächst aus Figur 1 ergibt, besteht die Befestigungsvorrichtung 10 aus einer U-förmigen Halteklammer 11 mit Seitenschenkeln 12 und einem die Seitenschenkeln verbindenden Steg 13. Der Steg 13 wird durchsetzt von einer Spannschraube 14, die in einer an dem Steg 13 befestigten Gewindemutter 15 längsverschiebbar ist. An ihrem zwischen den Seitenschenkeln 12 der Halteklammer 11 liegenden und zur Anlage an einer Geländerstrebe des Balkongeländers bestimmten Ende ist die Spannschraube 14 mit einem Anlagestück 16 versehen; an dem gegenüberliegenden, aus der Halteklammer 11 hervorstehenden Ende ist ein Knebel 25 an der Spannschraube 14 angebracht, um deren Handhabung beim Drehen zu erleichtern. Weiterhin sind die oberen Enden 23 der Halteklammer 11 nach innen umgebogen und an ihren Endbereichen mit Verdickungen 24 versehen. Die Form der Halteklammer ist so ausgestattet, dass die lichte Breite der Halteklammer 11 zwischen ihren Seitenschenkeln 12 im Bereich ihres Steges 13 geringer ist als im Bereich ihrer Enden 23.

Mit der Halteklammer 11 wirkt ein Formteil 17 zusammen, welches mit seiner Unterseite 18 dem Anlagestück 16 der Spannschraube 14 gegenüberliegt, so dass, wie noch zu beschreiben sein wird, die Geländerstrebe eines Balkongeländers zwischen der Unterseite 18 des Formteils 17 und dem Anlagestück 16 der Spannschraube 14 eingeklemmt wird. Auf der gegenüberliegenden Oberseite ist eine ebene Fläche 19 ausgebildet, in die eine Gewindebohrung 20 eingelassen ist. Zur Ausbildung einer Formschlussverbindung des Formteils 17 mit der Halteklammer 11 sind beidseitig der ebenen Fläche 19 in dem Formteil 17 von der Oberseite des Formteils 17 ausgehende und sich in Richtung von dessen Unterseite 18 erstreckende Nuten 21 ausgebildet, in welche die umgebogenen Enden 23 der Seitenschenkel 12 der Halteklammer 11 in Eingriff gebracht werden können. Zur Aufnahme der endseitig an den Enden 23 vorgesehenen Verdickungen 24 weisen die Nuten 21 des Formteils 17 in ihrem Tiefsten einen erweiterten Querschnitt 22 auf, was dazu führt, dass das Formteil 17 lediglich seitlich zwischen die Enden 23 der Seitenschenkel 12 der Halteklammer 11 einschiebbar ist und die Enden 23 der Seitenschenkel 12 bei montierter Befestigungsvorrichtung 10 nicht aus den Nuten 21 des Formteils 17 herausgezogen werden können.

Wie sich aus Figur 2 ergibt, wird die Halterklammer 11 an der Geländerstrebe 30 eines Balkongeländers 29 von der Unterseite der Geländerstrebe 30 so angesetzt, dass die Geländerstrebe 30 zwischen den Seitenschenkel 12 der Halteklammer 11 zu Liegen kommt. Das Formteil 17 wird auf der Oberseite der Geländerstrebe 30 seitlich zwischen die Seitenschenkel 12 der Halteklammer 11 eingeschoben, wobei die an den Seitenschenkeln 12 befindlichen Verdickungen 24 in den erweiterten Querschnitt 22 der Nuten 21 des Formteils 17 eingreifen, so dass entsprechend Figur 3 eine Formschlussverbindung zwischen Halteklammer 11 und Formteil 17 gegeben ist. Durch Festziehen der Spannschraube 14 wird die Befestigungsvorrichtung 10 an der Geländerstrebe 30 festgelegt.

Wie sich aus Figur 3 ergibt, kann nun ein Funktionsgegenstand beispielsweise in Form eines Blumentopfes 26 auf der ebenen Fläche 19 des Formteils 17 befestigt werden, indem eine Gewindeschraube 27 den Boden des Blumentopfes 26 durchgreift und in der Gewindebohrung 20 des Formteils 17 eingeschraubt ist. Damit ist eine sichere Befestigung des Blumentopfes 26 an dem Balkongeländer 29 gewährleistet.

Die in der vorstehenden Beschreibung, den Patentansprüchen, den Zeichnungen und der Zusammenfassung offenbarten Merkmale des Gegenstandes dieser Unterlagen können einzeln als auch in beiliegenden Kombinationen untereinander für die Verwirklichung der Erfindung in ihren verschiedenen Ausführungsformen wesentlich sein.

## Patentansprüche

1. Befestigungsvorrichtung für Funktionsgegenstände wie Blumentopf (26), Aschenbecher, Flaschenhalter, Glashalter oder dergleichen an einer Geländerstrebe (30) eines Balkongeländers (29), bestehend aus einer U-förmigen Halteklammer (11), deren Seitenschenkel (12) die Geländerstrebe (30) zwischen sich aufnehmen und in deren ihre Seitenschenkel (12) verbindendem Steg (13) eine in Anlage an der von der Halteklammer (11) umfassten Geländerstrebe (30) zu bringende und durch Drehung in einem an dem Steg (13) ausgebildeten Gewinde längsverschiebbare Spannschraube (14) vorgesehen ist, und aus einem die offene Seite der Halteklammer (11) verschließenden Formteil (17), welches mit seiner dem Steg (13) zugewandten Unterseite (18) auf der Geländerstrebe (30) aufliegt und auf seiner gegenüberliegenden Oberseite eine ebene Fläche (19) mit einer darin eingelassenen Gewindebohrung (20) zur Aufnahme einer den Funktionsgegenstand an dem Formteil (17) festlegenden Gewindeschraube (27) aufweist, wobei an dem Formteil (17) eine Formschlussverbindung mit den beiden darin eingreifenden freien Enden (23) der Seitenschenkel (12) der Halteklammer (11) eingerichtet ist.

2. Befestigungsvorrichtung nach Anspruch 1, bei welcher die Formschlussverbindung mit jedem Seitenschenkel (12) jeweils aus einer in das massiv ausgebildete Formteil (17) eingelassenen. von der Oberseite des Formteils (17) ausgehenden und sich in Richtung von dessen Unterseite (18) erstreckenden Nut (21) gebildet ist, in welchen Nuten (21) die hakenartig nach innen umgebogenen Enden (23) der Seitenschenkel (12) der Halteklammer (11) eingreifen.

3. Befestigungsvorrichtung nach Anspruch 2, bei welchem die in den Nuten (21) des Formteiles (17) festgelegten Enden der Seitenschenkel (12) der Halteklammer (11) mit einer Verdickung (24) versehen sind, und die Nuten (21) des Formteils (17) in ihrem Tiefsten einen erweiterten Querschnitt (22) zur Aufnahme der Verdickungen (24) der Enden (23) der Seitenschenkel (12) aufweisen derart, dass die Verdickungen (24) in den Nuten (21) formschlüssig festgelegt sind und das Formteil (17) seitlich zwischen die Enden (23) der Seitenschenkel (12) der Halteklammer (11) einschiebbar ist.

4. Befestigungsvorrichtung nach einem der Ansprüche 1 bis 3, bei welcher die lichte Breite der Halteklammer (11) zwischen ihren Seitenschenkeln (12) im Bereich ihres Steges (13) geringer ist als im Bereich der an dem Formteil (17) festgelegten Enden (23) der Seitenschenkel (12).

5. Befestigungsvorrichtung nach einem der Ansprüche 1 bis 4, bei welcher das Formteil an seiner dem Steg (13) der Halteklammer (11) zugewandten Unterseite (18) eine die Geländerstrebe (30) aufnehmende Einziehung aufweist.

6. Befestigungsvorrichtung nach einem der Ansprüche 1 bis 5, bei welcher an dem dem Formteil (17) zugewandten Ende der Spannschraube (14) ein an die Kontur der Geländerstrebe (30) angepasstes Anlagestück (16) angebracht ist.

7. Befestigungsvorrichtung nach einem der Ansprüche 1 bis 6, bei welcher die Halteklammer (11) aus einem federnden Material besteht.
